(19) Europäisches Patentamt
European Patent Office
Office européen des brevets

(11) **EP 1 152 161 B1**

(12) **EUROPÄISCHE PATENTSCHRIFT**

(45) Veröffentlichungstag und Bekanntmachung des Hinweises auf die Patenterteilung:
**13.08.2003   Patentblatt 2003/33**

(51) Int Cl.⁷: **F16D 23/14**

(21) Anmeldenummer: **01110532.7**

(22) Anmeldetag: **28.04.2001**

(54) **Kupplungsausrücklager**

Clutch release bearing

Butée de débrayage

(84) Benannte Vertragsstaaten:
**DE ES FR GB IT**

(30) Priorität: **04.05.2000   DE 10021709**

(43) Veröffentlichungstag der Anmeldung:
**07.11.2001   Patentblatt 2001/45**

(73) Patentinhaber: **INA-Schaeffler KG**
**91074 Herzogenaurach (DE)**

(72) Erfinder: **Klöpfer, Bernhard**
**91438 Bad Windsheim (DE)**

(56) Entgegenhaltungen:
**EP-A- 0 657 658          DE-A- 19 716 218**
**US-A- 5 993 067**

- **ESCHMANN, HASBARGEN, WEIGAND: "DIE WÄLZLAGERPRAXIS", 1953, OLDENBOURG, MÜNCHEN**
- **ESCHMANN, HASBARGEN, WEIGAND: "BALL AND ROLLER BEARINGS", 1985, J. WILEY, CHICHESTER**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung bezieht sich auf ein Ausrücklager, eingesetzt in einer zwischen der Brennkraftmaschine und einem Schaltgetriebe angeordneten Betätigungsvorrichtung, die zum Ausrücken einer Schalttrennkupplung vorgesehen ist. Das als ein Schrägkugellager ausgebildete Ausrücklager umfasst einen drehfixierten und einen drehbaren Lagerring. An Laufbahnen der Lagerringe sind Wälzkörper geführt, die in einem Wälzkörperkäfig eingesetzt sind. Kontaktflächen der Wälzkörper an den Laufbahnen der Lagerringe sind unter einem Druckwinkel angeordnet. Jeder Lagerring ist weiterhin mit einem radial ausgerichteten Ringflansch versehen, mit dem der innere Lagerring an dem axial verschiebbaren Bauteil der Betätigungsvorrichtung drehfixiert befestigt ist und der Ringflansch des äußeren, umlaufenden Lagerrings mittelbar oder unmittelbar mit der Schalttrennkupplung in Verbindung steht. Die Lagerringe gemeinsam mit zumindest einem Ringflansch umschließen einen Einbauraum, in dem die Wälzkörper an den Laufbahnen geführt eingesetzt sind und in dem ein Schmiermittel eingebracht ist, mit dem eine über die Gebrauchsdauer des Ausrücklagers bzw. über die Lebensdauer des Ausrücklagers ausreichende Schmierstoffmenge eingebracht ist. Zur Abdichtung der sich zwischen den Lagerringen einstellenden Ringspalte dient ein Dichtelement, welches an einem Lagerring befestigt, unter Einhaltung eines Spaltmaßes geführt ist.

## Hintergrund der Erfindung

Ein gattungsbildendes Ausrücklager zeigt die DE 197 16 218 A1. Der Aufbau des Ausrücklagers umfasst einen drehstarr angeordneten inneren Lagerring, welcher über einen Ringflansch mit einem Verschiebeelement verbunden ist. Der zugehörigen äußere Lagerring bildet einen radial nach innen gerichteten Ringflansch, an dem im eingebauten Zustand eine Tellerfeder der Schalttrennkupplung kraftschlüssig abgestützt ist. Die Lagerringe in Verbindung mit Dichtelementen bewirken einen weitestgehend abgedichteten Einbauraum, in dem die Wälzkörper geführt sind. Weiterhin dient der Einbauraum als ein Schmierstoffreservoir. Die Dichtelemente sind dabei unter Einhaltung des Spaltmaßes bis an den zugehörigen weiteren Lagerring geführt.

Aus der DE 75 05 147-U ist ein Ausrücklager bekannt mit einem ebenfalls drehfixierten inneren Lagerring sowie einem umlaufenden äußeren Lagerring. Als Kugel gestaltete Wälzkörper sind zwischen den Lagerringen geführt. Die relativ groß dimensionierten Wälzkörper stützen sich über Kontaktflächen an den Lagerringen über einen Druckwinkel, < 45° ab. Ein derartiger Druckwinkel besitzt ein relativ großes, nachteiliges Lagerreibmoment, was sich negativ auf die Erwärmung des Ausrücklagers und damit auf die Lebensdauer auswirkt.

Die DE 38 04 729 A1 zeigt unterschiedlich gestaltete Ausrücklager. In Figur 7 ist ein Ausrücklager mit einem drehstarren Innenring und einem umlaufenden Außenring abgebildet, wobei zur Abdichtung eines Einbauraums für die Wälzkörper schleifende Dichtelemente vorgesehen sind. Ein Dichtelement stützt sich mit einer schleifenden Dichtlippe an dem umlaufenden äußeren Lagerring ab. Nachteilig bewirkt eine derartige Abdichtung eine Erwärmung des Ausrücklagers, die zu einem Schmiermittelverlust führt, einem Austritt von Schmiermittel aus dem Einbauraum, wodurch die Gefahr eines vorzeitigen Ausfalls des Ausrücklagers zunimmt.

## Zusammenfassung der Erfindung

Von den Nachteilen bekannter Lösungen ausgehend, ist es Aufgabe der vorliegenden Erfindung, ein kostenoptimiertes, bauraumoptimiertes Ausrücklager aus einfach gestalteten Einzelteilen zu schaffen, zur Erzielung einer verbesserten Gebrauchsdauer bzw. Lebensdauer.

Diese Problemstellung wird erfindungsgemäß durch die kennzeichnenden Merkmale von Anspruch 1 gelöst.

In dem erfindungsgemäßen, als Schrägkugellager gestalteten Ausrücklager berühren die Wälzkörper den inneren und den äußeren Lagerring in je einem Punkt der Laufbahn. Die Verbindungslinie der Berührpunkte verläuft senkrecht zu den Laufbahnen und geht durch den Kugelmittelpunkt der Wälzkörper. In Richtung dieser Geraden wird die äußere Belastung von einem Lagerring auf den anderen übertragen. Die Verbindungslinie wird als Drucklinie des Ausrücklagers bezeichnet und der Winkel, den die Drucklinie mit der Radialebene einschließt, als Druckwinkel "$\alpha$" benannt.

Für das erfindungsgemäße Ausrücklager ist ein Druckwinkel "$\alpha$" $\geq 40°$ vorgesehen. Dieser auch als Berührwinkel bezeichnete Druckwinkel stellt sich ein zwischen einer radialen Ebene des Ausrücklagers und einer Verbindungslinie der Berührpunkte des Wälzlagers mit den Laufbahnen der Lagerringe. Der beanspruchte Druckwinkel von $\geq 40°$ stellt sich dabei unter einer Belastung und der damit verbundenen Verformung des Wälzlagers ein und entspricht damit dem tatsächlichen Berührwinkel.

Die Schmiegung, die auch als Radienverhältnis zu bezeichnen ist, definiert das Krümmungsverhältnis zwischen dem Außenring und den Wälzkörpern bzw. zwischen dem Innenring und den Wälzkörpern.

Für das erfindungsgemäße Ausrücklager ist eine geometrische Zuordnung der Lagerringe zu den Wälzkörpern, zur Bildung einer Schmiegung von $\geq 106$ % vorgesehen. Die Schmiegung ist ein wesentlicher Faktor für das Leistungsvermögen des Ausrücklagers, insbesondere hinsichtlich der statischen und dynamischen Tragzahl, der Schmierfilmbildung sowie der Reibung und des Verschleißes.

Zur Erzielung einer annähernd gleichen Hertz schen Pressung in den Kontaktzonen zwischen den Wälzkörpern und den Lagerringen ist die Schmiegung zwischen den Wälzkörpern und den Lagerringen erfindungsgemäß unterschiedlich. Die Auslegung des erfindungsgemäßen Ausrücklagers sieht eine Schmiegung zwischen dem inneren Lagerring und den Wälzkörpern von 106 bis 110% vor. Dagegen ist zwischen dem äußeren Lagerring und dem Wälzkörper eine Schmiegung von 110 bis 120 % vorgesehen. Der im Vergleich zu bisherigen Ausrücklagern erhöhte Schmiegungswert reduziert wesentlich die Bohrreibung im Ausrücklager, was zu einer deutlichen Steigerung der Lebensdauer bzw. der Gebrauchsdauer führt, wie in Versuchen ermittelt wurde. Die unterschiedlichen Schmiegungswerte gewährleisten eine gleiche Hertz sche Pressung an beiden Lagerringen, wodurch sich eine gleiche Ermüdungslebensdauer für beide Lagerringe einstellt.

Die erfindungsgemäße optimierte Lagergeometrie hinsichtlich des Druckwinkels und der Schmiegung bewirkt ein gewünschtes reduziertes Lagerreibmoment, was sich positiv auf die Lagereigenerwärmung und damit auf die Lebensdauer auswirkt.

Als weitere Maßnahme, die Lebensdauer des Ausrücklagers zu verbessern, schließt die Erfindung eine verbesserte Oberflächenrauheit der Laufbahnen für die Wälzkörper ein. Gemäß der Erfindung ist dazu eine Oberflächenrauheit von Ra < 0,2 µm vorgesehen, vorzugsweise Ra = 0,1µm.

Für die Herstellung der Lagerringe aus einem Blechband ist vorzugsweise ein spanloses Umformverfahren vorgesehen. Erfindungsgemäß wird dazu ein Blechband mit einer Wandstärke von < 1,6 mm benutzt. Im Vergleich zu bisherigen spanlos hergestellten Lagerringen ergibt sich dadurch eine deutliche Wandstärkenreduzierung, was sich vorteilhaft auf den erforderlichen Bauraum auswirkt und gleichzeitig einen Gewichtsvorteil beinhaltet. Das zur Herstellung der Lagerringe eingesetzte Umformverfahren gewährleistet die Fertigung der Lagerringe in einer Qualität, die keinerlei Nacharbeit für die WälzkörperLaufbahnen erfordert. Die Qualität dieser Fertigung ermöglicht eine Oberflächenrauheit von Ra < 0,2 µm, die ohne einen separaten Schleifvorgang erzielbar ist. Bei Bedarf, d. h. bei einer nicht ausreichenden Oberflächenqualität durch die spanlose Herstellung der Lagerringe können die Wälzkörperlaufbahnen mittels einer Schleifung nachgearbeitet werden.

Gemäß der Forderung, das erforderliche Bauvolumen des Ausrücklagers zu reduzieren, ist das Ausrücklager mit Wälzkörpern bestückt, deren Durchmesser < 5,5 mm beträgt. Wälzkörper mit einer derartigen Abmessung verringern den erforderlichen radialen Einbauraum des Ausrücklagers. Gleichzeitig stellt sich eine Gewichtseinsparung ein, und insgesamt ein Kostenvorteil.

Weitere vorteilhafte Ausgestaltungen der Erfindung sind Gegenstand der Ansprüche 2 bis 9.

Eine bevorzugte Weiterbildung der Erfindung sieht ein drehstarr am inneren Lagerring befestigtes Dichtelement vor. Das vorzugsweise annähernd zylindrisch gestaltete Dichtelement umschließt teilweise den äußeren Lagerring und erstreckt sich axial bis zu einem radial abgesetzten Bereich des äußeren umlaufenden Lagerrings. Am freien Ende ist das Dichtelement mit einem gerundeten, radial nach innen gerichteten Bord versehen, der die abgesetzte Außenkontur des äußeren Lagerrings hintergreift. Neben einer wirksamen Abdichtung des sich zwischen den Lagerringen bildenden Ringspaltes bewirkt das Dichtelement eine Verlier- bzw. Montagesicherung aller Einzelteile des erfindungsgemäßen Ausrücklagers, welches folglich vormontiert mit der Betätigungsvorrichtung kombinierbar ist.

Das erfindungsgemäße Ausrücklager ist mit einem weiteren Dichtelement versehen, welches vorzugsweise an dem inneren Lagerring lagefixiert ist und unter Einhaltung eines Spaltmaßes bis an eine Innenkontur des Außenrings geführt ist. Alternativ dazu bietet es sich an, das Dichtelement an dem äußeren Lagerring zu befestigen, das sich innenseitig bis nahe an den inneren Lagerring erstreckt. Die Dichtelemente sind vorzugsweise spanlos aus einem Blechband geformt und mittels einer Schweißverbindung oder eines Preßsitzes bzw. durch Verstemmen, an einem Lagerring befestigt. Alternativ schließt die Erfindung ebenfalls ein aus Kunststoff hergestelltes Dichtelement ein.

Zur Befestigung des Ausrücklagers an einem axial verschiebbaren Bauteil der Betätigungsvorrichtung, beispielsweise einer Verschiebehülse oder einem Ringkolben, der hydraulisch beaufschlagt ist, greift der Ringflansch des inneren Lagerrings formschlüssig in ein Halteblech ein, das an dem axial verschiebbaren Bauteil der Betätigungsvorrichtung befestigt. Mittels einer Tellerfeder wird eine kraftschlüssige Abstützung und damit eine drehstarre Befestigung des inneren Lagerrings an dem axial verschiebbaren Bauteil der Betätigungsvorrichtung erzielt. Zwischen dem Halteblech und dem Ringflansch kann zusätzliche eine Verdrehsicherung vorgesehen werden, die einen in die Ringnut des Halteblechs eingeformten Nocken aufweist, welcher formschlüssig in eine entsprechende Ausnehmung des Ringflansches eingreift.

Die Sicherheit der Befestigung des inneren Lagerrings an dem Halteblech verbessernd ist eine scheibenartig gestaltete Tellerfeder vorgesehen, die sich innenseitig an einem Bord des Halteblechs und außenseitig an dem Ringflansch des inneren Lagerrings kraftschlüssig abstützt. Diese Tellerfeder weist dazu eine Federkennlinie auf, deren Federkraft über den Federweg nahezu konstant bleibt. Eine derartige Tellerfeder bewirkt eine wirksame Haltefunktion selbst bei einer begrenzten axialen Verschiebung des Ringflansches in der Aufnahmenut bzw. Führungsnut des Halteblechs, die beispielsweise aufgrund von Axialschwingungen der Brennkraftmaschine über die Schalttrennkupplung auf das Ausrücklager übertragen werden.

Das im Einbauraum des Ausrücklagers vorgesehene Schmierstoffreservoir ist vorzugsweise an dem inneren, drehstarren Lagerring angeordnet. Das beispielsweise zwischen dem Wälzlagerkäfig und dem inneren Lagerring vorgesehene Schmierstoffreservoir ermöglicht einen stetigen, kontinuierlichen Nachschub von Schmiermittel an die Wälzkörper, die damit die Kontaktzone zwischen den Wälzkörpern und den Laufbahnen an den Lagerringen ausreichend mit Schmiermittel benetzen. Zur Vergrößerung des Schmiermittelreservoirs bietet es sich an, dieses beidseitig der Wälzkörper an dem inneren Lagerring vorzusehen.

**Kurze Beschreibung der Zeichnungen**

Der Erfindungsgedanke wird in der nachfolgenden Beschreibung eines Ausführungsbeispiels näher erläutert. Es zeigen:

Figur 1    in einem Längsschnitt das erfindungsgemäße Ausrücklager im eingebauten Zustand;

Figur 2    in einer Einzelteilzeichnung die erfindungsgemäße Tellerfeder;

Figur 3    in einem Diagramm den Federkennlinienverlauf.

**Detaillierte Beschreibung der Zeichnungen**

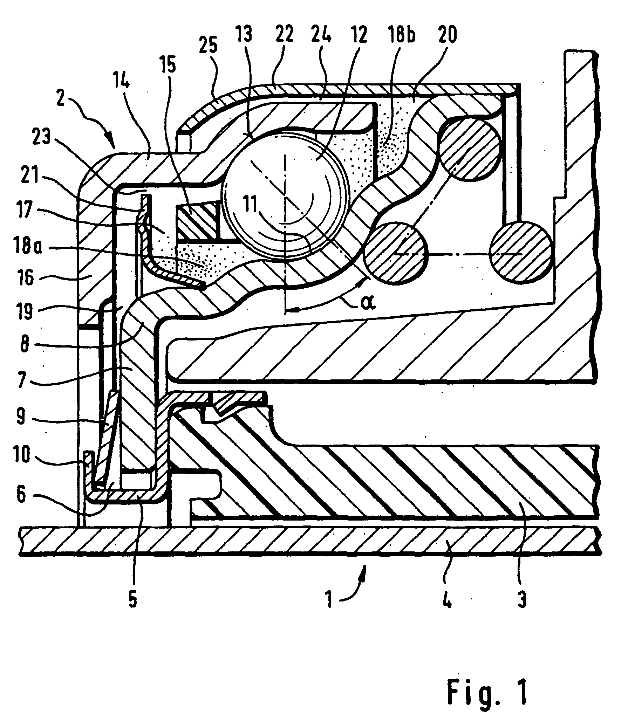

In Figur 1 ist mit der Bezugsziffer 1 eine Betätigungsvorrichtung im Halbschnitt abgebildet, umfassend ein Ausrücklager 2, welches an einem axial verschiebbaren Bauteil 3 befestigt ist. Die nur teilweise dargestellte, mechanisch oder hydraulisch beaufschlagbare Betätigungsvorrichtung 1 ist im eingebauten Zustand zwischen einer nicht näher dargestellten Brennkraftmaschine und einem Schaltgetriebe angeordnet und dient zum Ausrücken einer Schalttrennkupplung. Das Bauteil 3 ist auf einer Führungshülse 4 axial verschiebbar, welche eine die Brennkraftmaschine mit dem Schaltgetriebe verbindende Antriebswelle umschließt. Endseitig ist am Bauteil 3 ein Halteblech 5 befestigt, das eine Ringnut 6 bildet, in die ein Ringflansch 7 des inneren Lagerrings 8 formschlüssig eingreift. Eine Tellerfeder 9, eingesetzt zwischen einem Bord 10 des Halteblechs 5 und dem Ringflansch 7 bewirkt eine lagefixierte Befestigung des inneren Lagerrings 8. Der Lagerring 8 bildet vom Ringflansch 7 ausgehend eine wellenartige, nach außen gerichtete Kontur, an der innen- bzw. außenseitig verschiedene Bauteile abgestützt bzw. geführt sind. An einer Laufbahn 11 sind kugelförmig gestaltete Wälzkörper 12 geführt, welche außenseitig an der Laufbahn 13 des äußeren Lagerrings 14 geführt sind. Das Ausrücklager 2, im wesentlichen bestehend aus den Lagerringen 11, 14 und den in einem Käfig 15 eingesetzten Wälzkörper 12, ist als Schrägkugellager ausgebildet, bei dem die Kontaktflächen zwischen den Wälzkörpern 12 und den Laufbahnen in einem Druckwinkel "α" zu einer Radialachse angeordnet sind. Vergleichbar dem Ringflansch 7 ist auch der äußere Lagerring 14 mit einem radial ausgerichteten Ringflansch 16 versehen, über den das Ausrücklager 2 mittelbar oder unmittelbar mit der Schalttrennkupplung in Verbindung steht.

Die Lagerringe 8, 14 in Verbindung mit den Ringflanschen 7, 16 umschließen einen Einbauraum 17 zur Aufnahme der Wälzkörper 12. In dem Einbauraum 17, dem inneren Lagerring 8 zugeordnet, sind weiterhin Schmierstoffreservoirs 18a, 18b eingebracht, die eine kontinuierliche Schmierung der Wälzkörper 12 bzw. eine Schmierstoffbenetzung der Laufbahnen 11, 13 sicherstellen, zur Erzielung eines wartungsfreien Ausrücklagers 2, wobei das Schmierstoffreservoir 18a, 18b so ausgelegt ist, dass eine Schmierung über die gesamte Lebensdauer des Ausrücklagers 2 gewährleistet ist. Zur Abdichtung von Ringspalten 19, 20 ist das Ausrücklager 2 mit Dichtelementen 21, 22 versehen, die jeweils an dem inneren Lagerring 8 lagefixiert sind. Das Dichtelement 21, ausgebildet als ein Winkelblech, ist dabei mit einem Schenkel kraftschlüssig an dem inneren Lagerring 8 gehalten und erstreckt sich mit einem freien Ende unter Einhaltung des Spaltmaßes 23 bis an eine Innenkontur des äußeren Lagerrings 14. Das weitere Dichtelement 22, ausgebildet als ein zylindrisches, aus einem Blechband gestaltetes Bauteil, ist auf einem zylindrischen Abschnitt des Lagerrings 8 befestigt. Das den Ringspalt 20 überdeckende Dichtelement 22 umschließt längenbegrenzt unter Einhaltung des Spaltmaßes 24 den äußeren Lagerring 14, wobei ein Endabschnitt 25 einem gestuften Bereich des Lagerrings 14 hintergreift und damit neben einer Abdichtung des Ringspaltes 20 gleichzeitig eine Montagesicherung aller Bauteile des Ausrücklagers 2 sicherstellt.

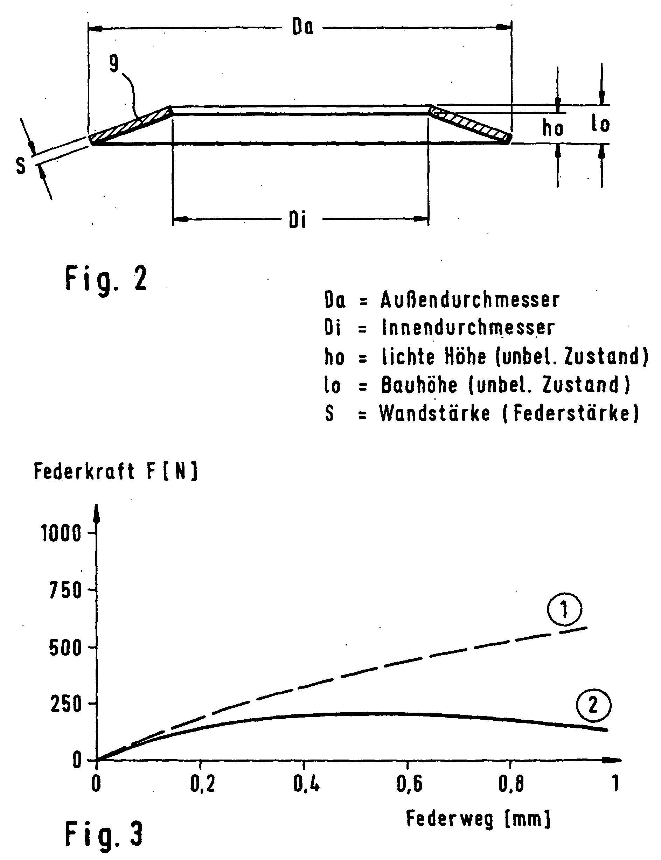

Die Figur 2 zeigt die Tellerfeder 9 in einer Einzelteilzeichnung. Die Auslegung der Tellerfeder 9 erfolgt unter Beachtung nachfolgender Dimensionierungsbereiche:

a) $7 \leq \Delta R/S \leq 15$
Dabei wird R gebildet durch die Beziehung $\frac{Da - Di}{2}$

b) $1,3 \leq h_o/s \leq 4$

Je nach Erfordernis bzw. dem jeweiligen Bedarfsfall angepasst, ist die Tellerfeder 9 unter Beachtung einer dieser zuvor angegebenen Beziehungen oder durch eine Kombination dieser Dimensionierungsbereiche auslegbar zur Erreichung eines gewünschten Kennlinienverlaufs von Federkraft/Federweg, wie dieser der Kennlinie "2" gemäß Figur 3 entspricht.

In der Figur 3 ist in einem Diagramm der Kennlinienverlauf bisheriger Tellerfedern von Ausrücklagern einer erfindungsgemäßen Tellerfeder gegeübergestellt. In dem Diagramm ist auf der Ordinate die Federkraft in N und auf der Abszisse der Federweg in "mm" aufgetragen. Die Kennlinie "1" zeigt den Federkraftverlauf bisheriger Tellerfedern und verdeutlicht einen stetigen Anstieg der Federkraft mit zunehmendem Federweg. Im Gegensatz dazu zeigt die Kennlinie "2" der erfindungsgemäßen Tellerfeder eine nahezu konstante Federkraft über den Federweg. Eine derartig ausgelegte Tellerfeder ermöglicht einen wirksamen, fertigungsbedingten Toleranzausgleich und damit eine sichere kraftschlüssige Abstützung des Ringflansches 7 an dem Halteblech 5 bzw. dem Bauteil 3 und damit eine funktionssichere Befestigung des Ausrücklagers 2.

**Bezugszeichen**

| | |
|---|---|
| 1 | Betätigungsvorrichtung |
| 2 | Ausrücklager |
| 3 | Bauteil |
| 4 | Führungshülse |
| 5 | Halteblech |
| 6 | Ringnut |
| 7 | Ringflansch |
| 8 | Lagerring |
| 9 | Tellerfeder |
| 10 | Bord |
| 11 | Laufbahn |
| 12 | Wälzkörper |
| 13 | Laufbahn |
| 14 | Lagerring |
| 15 | Käfig |
| 16 | Ringflansch |
| 17 | Einbauraum |
| 18a | Schmierstoffreservoir |
| 18b | Schmierstoffreservoir |
| 19 | Ringspalt |
| 20 | Ringspalt |
| 21 | Dichtelement |
| 22 | Dichtelement |
| 23 | Spaltmaß |
| 24 | Spaltmaß |
| 25 | Endabschnitt |

**Patentansprüche**

1. Ausrücklager, ausgebildet als ein Schrägkugellager für eine Betätigungsvorrichtung einer Schalttrennkupplung, wobei:

   - zwischen einem ersten drehfixierten inneren Lagerring (8) und einem zweiten umlaufenden äußeren Lagerring (14) in einem Käfig (15) eingesetzte Wälzkörper (12) angeordnet sind;

   - der innere Lagerring (8) mit einem radial ausgerichteten Ringflansch (7)) an der Betätigungsvorrichtung lagefixiert ist und der äußere Lagerring (14) über einen radial ausgerichteten Ringflansch (16) mit der Schalttrennkupplung verbindbar ist;

   - ein Einbauraum (17), der von den Lagerringen (8, 14) gemeinsam mit den Ringflanschen (7, 16) umschlossen ist, die Wälzkörper (12) sowie zumindest ein Schmierstoffreservoir (18a, 18b,) aufnimmt,

   - Dichtelemente (21, 22), die an einem Lagerring lagefixiert sind zur Abdichtung von Ringspalten (19, 20) vorgesehen sind, die sich zwischen den Lagerringen (8, 14) bilden, wobei die Dichtelemente bis auf ein Spaltmaß (3, 24) an den zugehörigen weiteren Lagerring des Ausrücklagers (2) geführt sind, **dadurch gekennzeichnet, dass**

   - die mittels eines spanlosen Umformverfahrens aus einem Blechband hergestellten Lagerringe (8, 14) eine Wandstärke von < 1,6mm aufweisen;

   - das Umformverfahren zur Herstellung der Lagerringe (8, 14) eine Oberflächenrauheit von Ra < 0,2μm an den Laufbahnen (11, 13) für die Wälzkörper (12) sicherstellt;

   - zwischen der Laufbahn (11) des inneren Lagerringes (8) und den Wälzkörpern (12) eine Schmiegung in einem Bereich zwischen 106% und 110% vorgesehen ist;

   - zwischen der Laufbahn (13) des äußeren Lagerringes (14) und den Wälzkörpern (12) eine Schmiegung in einem Bereich zwischen 110 % und 120% vorgesehen ist;

   - die Schmiegung zwischen den Wälzkörpern (12) und dem inneren Lagerring (8) kleiner ist als die Schmiegung zwischen den Wälzkörpern (12) und dem äußeren Lagerring (14);

   - für das Ausrücklager (2) ein Druckwinkel (α) ≥ 40° vorgesehen ist;

   - die Wälzkörper (12) einen Durchmesser < 5,5mm aufweisen.

2. Ausrücklager nach Anspruch 1, bei dem das an dem inneren Lagerring (8) drehstarr befestigte Dichtelement (22) den äußeren Lagerring (14) unter Einhaltung eines Spaltmaßes (24) teilweise umschließt und mit einem Endabschnitt (25) radial hintergreift.

3. Ausrücklager nach Anspruch 1, mit einem drehstarr an dem inneren Lagerring (8) angeordneten, scheibenartig gestalteten Dichtelement (21), das bis auf ein Spaltmaß (23) innenseitig an den äußeren Lagerring (14) herangeführt ist.

4. Ausrücklager nach Anspruch 2 oder 3, deren Dichtelement (21, 22) spanlos aus einem Blechband geformt ist, und mittels eines Passungssitzes oder einer unlösbaren Verbindung an dem Lagerring (8, 14) befestigt ist.

5. Ausrücklager nach Anspruch 1, wobei zur Lagefixierung des inneren Lagerrings (8) der Ringflansch (7) mittels einer Tellerfeder (9) und eines Halteblechs (5) an einem axial verschiebbaren Bauteil (3) der Betätigungsvorrichtung kraftschlüssig gehalten ist.

6. Ausrücklager nach Anspruch 5, wobei die scheibenartig gestaltete Tellerfeder (9) innenseitig an einem Bord (10) des Halteblechs (5) und außenseitig an dem Ringflansch (7) des inneren Lagerrings (8) abgestützt ist.

7. Ausrücklager nach Anspruch 5, deren Tellerfeder (9) eine Federkennlinie aufweist, die über den Federweg eine nahezu konstante Federkraft aufweist.

8. Ausrücklager nach Anspruch 1, wobei das Schmierstoffreservoir (18a, 18b) dem inneren Lagerring (8) zugeordnet ist.

9. Ausrücklager nach Anspruch 8, wobei an dem inneren Lagerring (8) beidseitig der Wälzkörper (12) ein Schmierstoffreservoir (18a, 18b) vorgesehen ist.

**Claims**

1. Disengagement bearing, designed as an annular ball bearing for an activating device of a shift-type separating clutch,

   - rolling bodies (12) inserted in a cage (15) being arranged between a first rotationally fixed inner bearing ring (8) and a second rotating outer bearing ring (14);

   - the inner bearing ring (8) being fixed in position on the actuating device by means of a radially oriented annular flange (7) and the outer bearing ring (14) being connectable to the shift-type separating clutch via a radially oriented annular flange (16);

   - an installation space (17), which is surrounded by the bearing rings (8, 14) together with the annular flanges (7, 16), receiving the rolling bodies (12) and also at least one lubricant reservoir (18a, 18b);

   - sealing elements (21, 22), which are fixed in position on one bearing ring, being provided for sealing off annular gaps (19, 20) which are formed between the bearing rings (8, 14), the sealing elements being led, with the exception of a gap dimension (3, 24), up to the associated further bearing ring of the disengagement bearing (2),

**characterized in that**

   - the bearing rings (8, 14), produced from a sheet-metal strip by means of a non-cutting forming method, have a wall thickness of < 1.6 mm;

   - the forming method for producing the bearing rings (8, 14) ensures a surface roughness of Ra < 0.2 μm on the raceways (11, 13) for the rolling bodies (12);

   - an oscillation in a range between 106% and 110% is provided between the raceway (11) of the inner bearing ring (8) and the rolling bodies (12);

   - an oscillation in a range of between 110% and 120% is provided between the raceway (13) of the outer bearing ring (14) and the rolling bodies (12);

   - the oscillation between the rolling bodies (12) and the inner bearing ring (8) is lower than the oscillation between the rolling bodies (12) and the outer bearing ring (14);

   - a pressure angle ($\alpha$) of $\geq 40°$ is provided for the disengagement bearing (2);

   - the rolling bodies (12) have a diameter of < 5.5 mm.

2. Disengagement bearing according to Claim 1, in which the sealing element (22) fastened in a rotationally rigid manner to the inner bearing ring (8) partially surrounds the outer bearing ring (14), with a gap dimension (24) being maintained, and with an end portion (25) engages radially behind the said outer bearing ring.

3. Disengagement bearing according to Claim 1, with a disc-like sealing element (21) which is arranged in a rotationally rigid manner on the inner bearing ring (8) and which is led, with the exception of a gap dimension (23), up to the outer bearing ring (14) on the inside.

4. Disengagement bearing according to Claim 2 or 3, the sealing element (21, 22) of which is formed in a non-cutting manner from a sheet-metal strip and is fastened to the bearing ring (8, 14) by means of a fit or of an unreleasable connection.

5. Disengagement bearing according to Claim 1, in which, to fix the inner bearing ring (8) in position, the annular flange (7) is held non-positively on an axially displaceable component (3) of the actuating device by means of a cup spring (9) and a holding plate (5).

6. Disengagement bearing according to Claim 5, the disc-like cup spring (9) being supported, on the inside, against a rim (10) of the holding plate (5) and, on the outside, against the annular flange (7) of the inner bearing ring (8).

7. Disengagement bearing according to Claim 5, the cup spring (9) of which has a spring characteristic which has a virtually constant spring force over the spring excursion.

8. Disengagement bearing according to Claim 1, the lubricant reservoir (18a, 18b) being assigned to the inner bearing ring (8).

9. Disengagement bearing according to Claim 8, a lubricant reservoir (18a, 18b) being provided on the inner bearing ring (8) on both sides of the rolling bodies (12).

**Revendications**

1. Butée de débrayage, formée d'un roulement à billes oblique pour un dispositif de commande d'un embrayage de changement de vitesse, dans laquelle :

   - des corps de roulement (12) montés dans une cage (15) sont disposés entre une première bague de roulement intérieure fixe en rotation (8) et une seconde bague de roulement extérieure tournante (14) ;
   - la bague de roulement intérieure (8) est fixée en position sur le dispositif de commande avec une bride annulaire orientée radialement (7) et la bague de roulement extérieure (14) peut être assemblée à l'embrayage de changement de vitesse par une bride annulaire orientée radialement (16) ;
   - un espace de montage (17), qui est entouré par les bagues de roulement (8, 14) avec les brides annulaires (7, 16), reçoit les corps de roulement (12) ainsi qu'au moins un réservoir de lubrifiant (18a, 18b) ;
   - il est prévu des éléments d'étanchéité (21, 22), qui sont fixés en position sur une bague de roulement pour fermer des fentes annulaires (19, 20), qui se forment entre les bagues de roulement (8, 14), dans laquelle les éléments d'étanchéité sont menés à une dimension de fente (3, 24) près sur l'autre bague de roulement associée de la butée de débrayage (2),

**caractérisée en ce que**

   - les bagues de roulement (8, 14) fabriquées au moyen d'un procédé de formage sans enlèvement de copeaux à partir d'une bande de tôle présentent une épaisseur de paroi < 1,6 mm ;
   - le procédé de formage pour la fabrication des bagues de roulement (8, 14) assure une rugosité de surface de Ra < 0,2 µm sur les pistes de roulement (11, 13) pour les corps de roulement (12) ;
   - il est prévu entre la piste de roulement (11) de la bague de roulement intérieure (8) et les corps de roulement (12) une osculation dans une plage comprise entre 106 % et 110 % ;
   - il est prévu entre la piste de roulement (13) de la bague de roulement extérieure (14) et les corps de roulement (12) une osculation dans une plage comprise entre 110 % et 120 % ;
   - l'osculation entre les corps de roulement (12) et la bague de roulement intérieure (8) est plus petite que l'osculation entre les corps de roulement (12) et la bague de roulement extérieure (14) ;
   - il est prévu pour la butée de débrayage (2) un angle de pression $(\alpha) \geq 40°$ ;
   - les corps de roulement (12) présentent un diamètre < 5,5 mm.

2. Butée de débrayage selon la revendication 1, dans laquelle l'élément d'étanchéité (22) fixé de façon rigide en rotation sur la bague de roulement intérieure (8) entoure partiellement la bague de roulement extérieure (14) en respectant une dimension de fente (24) et l'accroche radialement à l'arrière avec une partie d'extrémité (25).

3. Butée de débrayage selon la revendication 1, avec un élément d'étanchéité en forme de disque (21), disposé de façon rigide en rotation sur la bague de roulement intérieure (8), qui est mené à une dimension de fente (23) près du côté intérieur sur la bague de roulement extérieure (14).

4. Butée de débrayage selon la revendication 2 ou 3, dont l'élément d'étanchéité (21, 22) est formé sans enlèvement de copeaux à partir d'une bande de tôle, et est fixé à la bague de roulement (8, 14) au moyen d'un ajustement fin ou d'un assemblage indémontable.

**5.** Butée de débrayage selon la revendication 1, dans laquelle, pour fixer la position de la bague de roulement intérieure (8), la bride annulaire (7) est maintenue par force au moyen d'une rondelle élastique (9) et d'une tôle de maintien (5) sur une pièce (3) du dispositif de commande, déplaçable axialement.

**6.** Butée de débrayage selon la revendication 5, dans laquelle la rondelle élastique (9) en forme de disque est appuyée du côté intérieur sur un rebord (10) de la tôle de maintien (5) et du côté extérieur sur la bride annulaire (7) de la bague de roulement intérieure (8).

**7.** Butée de débrayage selon la revendication 5, dont la rondelle élastique (9) présente une caractéristique élastique qui présente une force élastique pratiquement constante sur toute la course du ressort.

**8.** Butée de débrayage selon la revendication 1, dans laquelle le réservoir de lubrifiant (18a, 18b) est associé à la bague de roulement intérieure (8).

**9.** Butée de débrayage selon la revendication 8, dans laquelle il est prévu un réservoir de lubrifiant (18a, 18b) sur la bague de roulement intérieure (8) de part et d'autre des corps de roulement (12).

Fig. 1

Fig. 2

Da = Außendurchmesser
Di = Innendurchmesser
ho = lichte Höhe (unbel. Zustand)
lo = Bauhöhe (unbel. Zustand)
S = Wandstärke (Federstärke)

Fig. 3